(19) Europäisches Patentamt
European Patent Office
Office européen des brevets

(11) **EP 1 982 963 B1**

(12) **EUROPÄISCHE PATENTSCHRIFT**

(45) Veröffentlichungstag und Bekanntmachung des Hinweises auf die Patenterteilung:
**15.03.2017 Patentblatt 2017/11**

(51) Int Cl.:
***C03B 19/14*** *(2006.01)*   ***C03B 25/02*** *(2006.01)*
***C03B 32/00*** *(2006.01)*   ***C03C 3/06*** *(2006.01)*
***C03C 4/00*** *(2006.01)*

(21) Anmeldenummer: **08154312.6**

(22) Anmeldetag: **10.04.2008**

(54) **Verfahren zur Herstellung eines optischen Bauteils aus synthetischem Quarzglas mit erhöhter Strahlenbeständigkeit, sowie Rohling zur Herstellung des Bauteils**

Method for producing an optical component of synthetic quartz glass with enhanced radiation resistance, and blank for producing the component

Procedé de production d'un composant optique en verre quartzeux synthétique avec une résistance aux rayonnements élevée, et ébauche pour la production du composant

(84) Benannte Vertragsstaaten:
**DE FR GB**

(30) Priorität: **20.04.2007 DE 102007019154**

(43) Veröffentlichungstag der Anmeldung:
**22.10.2008 Patentblatt 2008/43**

(73) Patentinhaber: **Heraeus Quarzglas GmbH & Co. KG**
**63450 Hanau (DE)**

(72) Erfinder:
- **KUEHN, Bodo**
  **63571, Gelnhausen (DE)**
- **KAISER, Steffen**
  **63456, Hanau (DE)**
- **KASSUBE, Denis**
  **63517, Rodenbach (DE)**
- **MERGET, Kerstin**
  **63755, Alzenau (DE)**

(74) Vertreter: **Staudt, Armin Walter**
**Sandeldamm 24a**
**63450 Hanau (DE)**

(56) Entgegenhaltungen:
**EP-A- 1 586 544**      **EP-A- 1 712 528**
**US-A1- 2005 187 092**   **US-A1- 2007 004 579**

- SHACKELFORD, J.F.; MASARYK, J.S.; FULRATH, R.M.: "Water Content, Fictive Temperature, and Density Relations for Fused Silica" JOURNAL OF THE AMERICAN CERAMIC SOCIETY, Bd. 53, Nr. 7, 1970, Seite 417, XP002490958
- SEN, S.; ANDRUS, R.L.; BAKER, D.E.; MURTAGH, M.T.: "Observation of an Anomalous Density Minimum in Vitreous Silica" PHYSICAL REVIEW LETTERS, Bd. 93, Nr. 12, 2004, Seiten 125902-1-125902-4, XP002490959
- SHELBY J E: "Density of vitreous silica" JOURNAL OF NON-CRYSTALLINE SOLIDS, NORTH-HOLLAND PHYSICS PUBLISHING. AMSTERDAM, NL, Bd. 349, 1. Dezember 2004 (2004-12-01), Seiten 331-336, XP004653377 ISSN: 0022-3093

## Beschreibung

Die Erfindung betrifft ein Verfahren zur Herstellung eines optischen Bauteils aus synthetischem Quarzglas mit erhöhter Strahlenbeständigkeit zur Verwendung in einem Mikrolithographiegerät mit einer Arbeitswellenlänge unterhalb von 250 nm, wobei ein Quarzglasrohling mit einem mittleren Hydroxylgruppengehalt zwischen 5 und 50 Gew.-ppm bereitgestellt und einer mehrstufigen Temperbehandlung unterzogen wird.

Weiterhin betrifft die Erfindung einen Rohling zur Herstellung eines optischen Bauteils aus Quarzglas zur Verwendung in einem Mikrolithographiegerät mit einer Arbeitswellenlänge unterhalb von 250 nm, wobei das Quarzglas im Mittel eine fiktive Temperatur unterhalb von 1080 °C und einen mittleren Gehalt an Hydroxylgruppen zwischen 5 bis 50 Gew.-ppm, und einen mittleren Wasserstoffgehalt im Bereich zwischen $5 \times 10^{15}$ und $1 \times 10^{17}$ Moleküle/cm$^3$ aufweist.

<u>Stand der Technik</u>

Optische Bauteile aus Quarzglas werden für die Übertragung energiereicher, ultravioletter Laserstrahlung in mikrolithographischen Belichtungs- und Projektionssystemen zur Herstellung hochintegrierter Schaltungen auf Substraten eingesetzt. Moderne mikrolithographische Projektionssysteme arbeiten mit Excimerlasern, die energiereiche, gepulste UV-Strahlung einer Wellenlänge von 248 nm (KrF-Laser) oder von 193 nm (ArF-Laser) abgeben. Dabei besteht allgemein die Forderung, dass eine im Bereich einer Objektebene des Beleuchtungssystems bereitgestellte Lichtverteilung möglichst homogen und winkelerhaltend und mit größt möglicher Auflösung in eine zur Objektebene konjugierte Bildebene des Projektionsobjektivs auf dem zu belichtenden Substrat übertragen wird. Jede im Lichtweg erzeugte Veränderung des Winkelspektrums führt zu einer Verzerrung der Intensitätsverteilung in der Objektivpupille, was zu einer unsymmetrischen Einstrahlung und damit zu einer Verschlechterung der Abbildungsleistung führt.

Hierbei spielen im Verlauf des bestimmungsgemäßen Einsatzes infolge der UV-Strahlung erzeugte Schädigungen der Quarzglas-Netzwerkstruktur eine entscheidende Rolle. Ein bekanntes Phänomen in diesem Zusammenhang ist die sogenannte "Kompaktierung", die während oder nach Laserbestrahlung mit hoher Energiedichte auftritt. Dieser Effekt äußert sich in einer im Wesentlichen radialsymmetrischen, lokalen Dichteerhöhung, die zu einem Anstieg des Brechungsindex und damit zu einer Verschlechterung der Abbildungseigenschaften des optischen Bauteils führt. Bei einer Bestrahlung mit linear polarisierter UV-Laserstrahlung wird außerdem eine nicht radialsymmetrische, anisotrope Dichte- und Brechzahländerung des Quarzglases beobachtet, die ebenfalls eine Veränderung der Abbildungseigenschaften des Bauteils bewirkt, und die im Folgenden als "zentrale Doppelbrechung" bezeichnet wird.

Das Quarzglas für den Quarzglasrohling wird durch Flammenhydrolyse siliziumhaltiger Ausgangssubstanzen mittels Verfahren hergestellt, die unter den Bezeichnungen VAD-Verfahren (Vapor Phase Axial Deposition), OVD Verfahren (Outside Vapor Phase Deposition), MCVD Verfahren (Modified Chemical Vapor Deposition) und PCVD Verfahren (oder auch PECVD-Verfahren; Plasma Enhanced Chemical Vapor Deposition) allgemein bekannt sind. Bei allen diesen Verfahrensweisen werden in der Regel mittels eines Brenners $SiO_2$-Partikel erzeugt und schichtweise auf einem Träger abgeschieden, der sich relativ zu einer Reaktionszone bewegt. Bei hinreichend hoher Temperatur im Bereich der Trägeroberfläche kommt es zu einem unmittelbaren Verglasen der $SiO_2$-Partikel ("Direktverglasen"). Im Unterschied dazu ist bei dem sogenannten "Sootverfahren" die Temperatur während des Abscheidens der $SiO_2$-Partikel so niedrig, dass eine poröse Sootschicht erhalten wird, die in einem separaten Verfahrensschritt zu transparentem Quarzglas gesintert wird. Sowohl das Direktverglasen als auch das Sootverfahren führen zu Rohlingen aus synthetischem Quarzglas in Form von Zylindern, Stäben, Blöcken, Rohren oder Platten, die zu optischen Bauteilen, wie Linsen, Fenstern, Filtern, Maskenplatten für den Einsatz in der Mikrolithographie weiter verarbeitet werden.

Um mechanische Spannungen innerhalb des Rohlings abzubauen und um eine homogene Verteilung der fiktiven Temperatur zu erreichen, wird der Quarzglasrohling üblicherweise sorgfältig getempert. In der EP 0 401 845 A1 wird beispielsweise ein Temperprogramm vorgeschlagen, bei dem der Rohling einer 50-stündigen Haltezeit bei einer Temperatur von etwa 1100°C unterworfen, und danach in einem langsamen Abkühlschritt mit einer mittleren Abkühlrate von 2°C/h auf 900°C abgekühlt wird, bevor das freie Abkühlen im geschlossenen Ofen erfolgt.

Eine mehrstufige Temperbehandlung zur Erzielung einer kompaktierungsresistenten Glasstruktur wird in der EP 1 586 544 A1 vorgeschlagen. Dabei wird ein Quarzglasrohling mit einem Hydroxylgruppengehalt zwischen 10 und 250 Gew.-ppm zunächst während einer Haltezeit von 8 Stunden auf 1130°C erhitzt und anschließend mit einer mittleren Abkühlrate von 4°C/h auf eine Temperatur von 1030°C abgekühlt und bei dieser Temperatur 4 Stunden lang gehalten. Anschließend wird der Quarzglaszylinder mit einer höheren mittleren Abkühlrate auf eine Temperatur von 300°C abgekühlt, woraufhin der Ofen abgeschaltet wird und der Quarzglaszylinder der freien Abkühlung des Ofens überlassen wird. Ähnliche Temperprogramme sind auch aus der EP 921 104 A1 und aus der EP 1 134 197 A1 bekannt.

Aus EP 1 712 528 A1 sind weiterhin Quarzglasrohlinge bekannt, die einen Hydroxylgruppengehalt von weniger als 50 Gew.-ppm und einen Wasserstoffgehalt von $3 \times 10^{16}$ Molekülen/cm$^3$ aufweisen. Weiterhin liegen deren mittlere fiktive Temperaturen bei 1055°C bzw. bei 1075°C. Das Verfahren zur Herstellung derartiger Quarzglasrohlinge umfasst unter anderem einen mehrstufigen Temperschritt zur Einstellung der fiktiven Temperatur.

In US 2007/0004579 A1 wird ein Verfahren zur Beladung eines Bauteils aus synthetischem Quarzglas mit Wasserstoff beschrieben. Die Beladung erfolgt bei einer Temperatur von weniger als 700°C, wobei das Bauteil vor der Beladung einer Temperbehandlung unterzogen wird, bei der es eine fiktive Temperatur im Bereich von 800 bis 1150°C erhält. Dabei wird zwischen einer schnellen Temperbehandlung und einer langsamen Temperbehandlung unterschieden. Die langsame Temperbehandlung erfolgt in mehrstufigen Behandlungsphasen. Darüber hinaus wird auch ein Verfahren zum Beladen mit Wasserstoff und gleichzeitigem Tempern bei einer Temperatur von 1100°C beschrieben, wobei schnell aufgeheizt und nach Halten auf Maximaltemperatur dann auch schnell abgekühlt wird.

Diese mehrstufigen Temperbehandlungen mit Behandlungsphasen bei einer höheren und einer niedrigeren Tempertemperatur haben gemeinsam, dass das Abkühlen von der höheren Tempertemperatur langsamer erfolgt als das Abkühlen von der niedrigeren Tempertemperatur. Das langsame Abkühlen von der höheren Tempertemperatur bietet der Netzwerkstruktur des Quarzglases ausreichend Zeit zum Relaxieren, so dass Spannungsdoppelbrechung abgebaut wird und sich eine niedrige fiktive Temperatur einstellt, was im Allgemeinen erwünscht ist.

Die Anforderungen an die Bauteile aus synthetischem Quarzglas für den Einsatz in der Mikrolithographie mit einer Wellenlänge von 193 nm in Form hoher Energiedichte, hoher Pulszahl und maximal zulässiger Wellenfrontverzerrung werden jedoch immer höher und es ist absehbar, dass trotz ausgeklügelter Nachbehandlungsmethoden die bisher üblichen Quarzglasqualitäten diesen Anforderungen nicht mehr genügen.

Technische Aufgabenstellung

Die Erfindung liegt daher die Aufgabe zugrunde, ein Verfahren zur Herstellung eines optischen Bauteils aus synthetischem Quarzglas bereit zu stellen, das hinsichtlich Kompaktierung und zentraler Doppelbrechung optimiert ist und eine vergleichsweise geringe Wellenfrontverzerrung beim bestimmungsgemäßen Einsatz aufweist. Außerdem liegt der Erfindung die Aufgabe zugrunde, einen zur Herstellung des Bauteils geeigneten Rohling aus synthetischem Quarzglas bereit zu stellen.

Diese Aufgabe wird ausgehend von einem Verfahren der eingangs genannten Gattung erfindungsgemäß dadurch gelöst, dass die Temperbehandlung des Quarzglasrohlings folgende Verfahrensschritte umfasst:

(a) eine erste Behandlungsphase, bei der der Quarzglasrohling in einem oberen Temperaturbereich zwischen 1130 °C und 1230 °C während einer ersten Behandlungsdauer behandelt wird,

(b) ein Abkühlen des Quarzglasrohlings mit einer mittleren Abkühlrate auf eine Abschrecktemperatur unterhalb von 1100 °C, wobei sich im Quarzglas eine fiktive Temperatur mit einem hohen Mittelwert von 1100 °C oder mehr einstellt,

(c) eine zweite Behandlungsphase, bei der der Quarzglasrohling in einem unteren Temperaturbereich zwischen 950 °C und 1100 °C während einer zweiten Behandlungsdauer derart behandelt wird, dass sich im Quarzglas eine fiktive Temperatur mit einem niedrigen Mittelwert einstellt, der um mindestens 50 °C niedriger liegt als der hohe Mittelwert der fiktiven Temperatur nach Verfahrensschritt (b), und die ein Abkühlen des Quarzglasrohlings mit einer zweiten mittleren Abkühlrate, die niedriger ist als die erste mittlere Abkühlrate, umfasst.

Im Allgemeinen wirkt sich eine niedrigere fiktive Temperatur vorteilhaft auf die UV-Strahlenresistenz von synthetischem Quarzglas aus, insbesondere auf dessen Kompaktierungsverhalten.

Andererseits zeigt sich jedoch keine strenge Korrelation zwischen der fiktiven Temperatur und der Kompaktierung bei UV-Bestrahlung, und unter Umständen kann ein rasches Abkühlen von höherer Tempertemperatur sogar zu einer besseren Strahlenbeständigkeit führen, wie dies in der oben erwähnten EP 1 586 544 A1 beschrieben ist, obwohl ein rasches Abkühlen tendenziell zu einer eher hohen fiktiven Temperatur führt.

Der diesen Beobachtungen innewohnende Widerspruch wird durch die Erfindung aufgelöst. Dabei wird davon ausgegangen, dass neben der fiktiven Temperatur noch ein weiterer Strukturparameter eine entscheidende Rolle für die Strahlenbeständigkeit spielt, der sich - wie auch die fiktive Temperatur - in Abhängigkeit von der thermischen Historie des Quarzglases einstellt. Genauer gesagt, basiert die Erfindung auf einem Modell, das davon ausgeht, dass das Quarzglas unterschiedliche Phasen aufweisen kann, die sich in ihrer Empfindlichkeit gegenüber UV-Strahlung und möglicherweise auch in ihrer Dichte unterscheiden. Die bei hoher Temperatur gebildete Phase wird im Folgenden als "Hochtemperaturphase" bezeichnet. Diese weist eine eher höhere Dichte und damit einhergehend eine geringere Kompaktierungsneigung auf. Demgegenüber zeigt die bei niedriger Temperatur thermodynamisch stabile "Niedrigtemperaturphase" eine geringere Dichte und eine höhere Kompaktierungsneigung bei UV-Bestrahlung. Beim Abkühlen des Quarzglasrohlings von hoher Temperatur findet eine Umwandlung von der Hochtemperaturphase in die Niedrigtemperaturphase statt, wobei die Kinetik der Umwandlung jedoch gehemmt sein kann.

Demzufolge ergeben sich beim Tempern des Rohlings folgende Problemstellungen:

1. Es ist sicherzustellen, dass sich anfänglich ein möglichst hoher Anteil an Hochtemperaturphase im Quarzglas des Rohlings ausbildet.

Dies wird gemäß der erfindungsgemäßen Lehre dadurch erreicht, dass der Quarzglasrohling bei hoher Tempertemperatur zwischen 1130 °C und 1230 °C behandelt wird. Die Temperaturbehandlung kann ein Halten bei einer konstanten Temperatur oder Abkühl- oder Aufheizvorgänge in diesem Temperaturbereich umfassen. Ziel ist, dass sich im Quarzglas ein hoher Anteil an Hochtemperaturphase in möglichst homogener Verteilung ausbildet.

2. Beim Abkühlen von der hohen Tempertemperatur soll sich ein möglichst geringer Anteil an Hochtemperaturphase in Niedrigtemperaturphase umwandeln.

Dies wird erfindungsgemäß dadurch gewährleistet, dass das Abkühlen des Quarzglasrohlings von der hohen Behandlungstemperatur auf eine niedrigere Temperatur unterhalb von 1100 °C mit einer vergleichsweise hohen mittleren Abkühlrate erfolgt (im Folgenden wird dieses rasche Abkühlen auch als "Abschrecken" bezeichnet). Die kinetisch beeinflusste Phasenumwandlung zur unerwünschten Niedrigtemperaturphase wird so unterdrückt. Da bisher keine Methoden zur quantitativen Analyse der Hochtemperatur- oder der Niedrigtemperaturphase bekannt sind, ist der Anteil der nach dem Abschrecken noch vorhandenen Hochtemperaturphase im Quarzglas nicht ohne weiteres direkt zu bestimmen, sondern kann allenfalls mittelbar anhand von UV-Schädigungsmessungen am fertigen Quarzglasrohling abgeschätzt werden. Dies ist jedoch extrem aufwändig. Aus Praktikabilitätserwägungen wird daher die fiktive Temperatur des Quarzglases nach Abschluss der ersten Behandlungsphase als Maß für den Grad der Phasenumwandlung angesetzt, unter der nachvollziehbaren Annahme, dass eine rasche Abschreckung des Quarzglases mit einer höheren fiktiven Temperatur und gleichzeitig mit einem höheren Erhaltungsgrad an Hochtemperaturphase einhergehen sollte. Demgemäß wird eine über das Rohlingvolumen gemittelte fiktive Temperatur von mindestens 1100 °C eingestellt. Im Vergleich zu UV-Schädigungsmessungen kann die mittlere fiktive Temperatur des Quarzglasrohlings relativ einfach gemessen und berechnet werden.

Wie oben erläutert, dient die fiktive Temperatur des Quarzglases lediglich als Hilfsgröße um sicherzustellen, dass nach der ersten Behandlungsphase weiterhin ein hohes Maß an Hochtemperaturphase vorhanden ist; davon abgesehen hat eine hohe fiktive Temperatur keine praktische Bedeutung für die Eigenschaften des Quarzglases.

3. Eher trifft das Gegenteil zu, denn für den bestimmungsgemäßen Einsatz des Quarzglasrohlings ist eine möglichst niedrige fiktive Temperatur erwünscht.

Die erwünschte niedrige fiktive Temperatur wird gemäß der erfindungsgemäßen Lehre mittels der zweiten Behandlungsphase durch eine Temperbehandlung bei niedrigerer Temperatur zwischen 950 °C und 1100 °C eingestellt. Diese Temperbehandlung ist nur in einem Temperaturbereich erfolgreich, in dem der günstige Effekt der allmählichen Verringerung der fiktiven Temperatur des Quarzglases den schädlichen Effekt durch eine fortschreitende Phasenumwandlung in Niedrigtemperaturphase überwiegt. Mit anderen Worten, die Behandlungstemperatur ist einerseits hoch genug, um ein Relaxieren der Netzwerkstruktur und ein Absenken der bis dahin zu hohen fiktiven Temperatur des Quarzglases in endlichen Behandlungszeiten zu ermöglichen, und andererseits ist sie niedrig genug, um eine fortdauernde kinetische oder thermodynamische Hemmung einer Phasenumwandlung in Niedrigtemperaturphase zu gewährleisten. Das Absenken der relativ hohen fiktiven Temperatur des Quarzglases durch die Behandlung im unteren Temperaturbereich - also bei vergleichsweise geringer Temperatur - erfordert jedoch lange Behandlungszeiten. Eine Absenkung des hohen Mittelwertes der fiktiven Temperatur um mindestens 50 °C ist aber in der Regel ausreichend. Wie auch oben für die Behandlung im oberen Temperaturbereich beschrieben, kann auch die Behandlung im unteren Temperaturbereich ein Halten bei einer konstanten Temperatur sowie Abkühl- oder Aufheizvorgänge in diesem Temperaturbereich umfassen.

Das erfindungsgemäße Verfahren ist zusammenfassend durch eine Behandlungsphase (a) gekennzeichnet, während der ein hoher Gehalt an Hochtemperaturphase im Quarzglas eingestellt wird, gefolgt von einer mehrstufigen Abkühlung des Quarzglases, die einen ersten Abkühlschritt (b) umfasst, der einem Abschrecken des Quarzglases von der hohen Temperatur entspricht und der durch eine relativ hohe mittlere Abkühlrate gekennzeichnet ist, um die Umwandlung der Hochtemperaturphase in Niedrigtemperaturphase zu unterdrücken; gefolgt von einem zweiten Abkühlschritt (c), der einem Tempern des Quarzglases entspricht, und der durch eine relativ geringe Abkühlrate gekennzeichnet ist, um dadurch eine möglichst geringe fiktive Temperatur einzustellen.

Im Zusammenhang mit der Erfindung bedeutet "hohe mittlere Abkühlrate", dass der Quotient des Temperaturbereichs, den das "Quarzglas zwischen den Verfahrensschritten (a) und (b) durchläuft und der dafür benötigten Dauer groß genug ist, um eine mittlere fiktive Temperatur oberhalb von 1100 °C einzustellen, und die größer ist als die "niedrige mittlere Abkühlrate", die sich als Quotient des Temperaturbereichs, den das "Quarzglas zwischen den Verfahrensschritten (b) und (c) durchläuft und der dafür benötigten Dauer ergibt, und die gleichzeitig niedrig genug ist, um eine niedrige fiktive Temperatur einzustellen, die mindestens 50 °C niedriger ist als die hohe fiktive Temperatur.

Erfindungsgemäß ist die erste mittlere Abkühlrate zum Abkühlen des Quarzglasrohlings aus dem oberen Temperaturbereich größer als die zweite mittlere Abkühlrate zum Abkühlen des Quarzglasrohlings vom unteren Temperaturbereich. Je schneller der Abschreckvorgang von der Temperatur im oberen Temperaturbereich erfolgt, umso geringer ist der Anteil der in Niedrigtemperaturphase umgewandelten Quarzglas-Netzwerkstruktur.

Das Ergebnis ist ein hoher Anteil an Hochtemperaturphase, die wiederum zu einer höheren Dichte des Quarzglases führt und wie eine "vorweggenommene" Kompaktierung der Glasstruktur insgesamt wirkt. Daher wirkt die kompaktere Netzwerkstruktur einer lokalen isotropen und anisotropen Dichteänderung bei UV-Bestrahlung entgegen. Es hat sich gezeigt, dass auf diese Art und Weise ein Quarzglasrohling erzeugt werden kann, der einer geringen Kompaktierung und zentrale Doppelbrechung bei UV-Bestrahlung unterliegt und der somit in der eingestrahlten Lichtverteilung eine geringe Wellenfrontverzerrung erzeugt.

Durch übliche Nachbearbeitung, wie Schleifen, Polieren, Einfassen und dergleichen, wird aus dem Rohling ein optisches Bauteil zum Einsatz in einem Projektions- oder Belichtungsobjektiv eines Mikrolithographiegeräts hergestellt.

Ein Hinweis auf die Ausbildung der genannten Hochtemperatur- und Niedrigtemperaturphase in Quarzglas findet sich in S. Sen et al. "Observation of an Anomalous Density Minimum in Vitreous Silica"; Phys. Rev. Letters, Vol. 93, No. 12 (2004), p. 125902-1 - 125902-3.

In die gleiche Richtung weist auch das seit Langem bekannte Verhalten des Quarzglases, wonach aus dem Temperaturbereich zwischen 1000 °C und 1500 °C rasch abgekühltes Quarzglas ein geringeres spezifisches Volumen und damit eine höhere spezifische Dichte aufweist, als langsam abgekühltes Quarzglas. Dieser Effekt beruht laut "R. Brückner, Silicon Dioxide; Encyclopedia of Applied Physics, Vol. 18 (1997), S. 101-131", auf einer Anomalie von synthetischem Quarzglas, bei dem der Verlauf des spezifischen Volumens im Bereich zwischen 1000 °C und 1500 °C einen negativen Temperaturkoeffizienten aufweist; das heißt, dass das spezifische Volumen von Quarzglas in diesem Temperaturbereich mit abnehmender Temperatur zunimmt, oder anders ausgedrückt, dass aus dem genannten Temperaturbereich schnell abgekühltes Quarzglas - mit einer hohen fiktiven Temperatur - eine höhere Dichte aufweist als langsam abgekühltes Quarzglas mit einer niedrigeren fiktiven Temperatur.

Ein gängiges Messverfahren zur Ermittlung der fiktiven Temperatur anhand einer Messung der Raman-Streuintensität bei einer Wellenzahl von etwa 606 cm$^{-1}$ ist in "Ch. Pfleiderer et. al; "The UV-induced 210 nm absorption band in fused Silica with different thermal history and stoichiometry"; J. Non-Cryst. Solids 159 (1993) 143-145" beschrieben.

Es hat sich als günstig erwiesen, wenn die erste Behandlungsphase ein Tempern des Quarzglasrohlings im Temperaturbereich von 1150 °C bis 1210 °C umfasst.

Durch das Tempern im genannten Temperaturbereich wird - bei möglichst niedriger Temperatur - die Beibehaltung oder die ausreichend schnelle Umwandlung der Quarzglas-Netzwerkstruktur in die gewünschte Hochtemperaturphase erleichtert.

Gleichermaßen hat es sich als vorteilhaft erwiesen, wenn die zweite Behandlungsphase ein Tempern im Temperaturbereich von 1000 °C bis 1100 °C umfasst.

Das Tempern in der zweiten Behandlungsphase dient dazu, die anfänglich hohe fiktive Temperatur des Quarzglases abzusenken. Die Behandlung bei einer Tempertemperatur im oben genannten Bereich - also bei einer mittleren Temperatur - bedingt eine schnellere Relaxation der Netzwerkstruktur und noch wirtschaftlich akzeptable Zeiten zur Absenkung der fiktiven Temperatur. Eine Behandlungsdauer von mindestens 100 Stunden ist jedoch sinnvoll.

Besonders bewährt hat sich eine Verfahrensweise, bei der die Abschrecktemperatur um mindestens 50 °C, vorzugsweise um mindestens 80 °C, niedriger liegt als die Behandlungstemperatur im oberen Temperaturbereich.

Je größer die Temperaturspanne zwischen der Behandlungstemperatur im oberen Temperaturbereich und der Abschrecktemperatur ist, umso verlässlicher kann die unerwünschte Umwandlung der Netzwerkstruktur in Niedrigtemperaturphase vermieden werden. Andererseits erschwert ein Abschrecken des Quarzglases über eine große Temperaturspanne die nachfolgende Einstellung einer niedrigen fiktiven Temperatur des Quarzglases. Ein Abschrecken über eine Temperaturspanne von mehr als 150 °C ist daher nicht bevorzugt.

Vorteilhafterweise ist die Abschrecktemperatur niedriger als 1090 °C, vorzugsweise niedriger als 1070 °C.

Es hat sich gezeigt, dass durch ein rasches Abkühlen auf eine Temperatur unterhalb von 1090 °C, vorzugsweise unterhalb von 1070 °C, ein geringer Anteil an Hochtemperaturphase umgewandelt wird. Dies zeigt sich dadurch, dass entsprechend tief abgeschreckte Quarzglas-Bauteile ein günstiges Kompaktierungsverhalten zeigen können, wenn sie nachträglich auf eine geringe fiktive Temperatur eingestellt werden.

Wie oben erläutert, ist der Anteil der in Niedrigtemperaturphase umgewandelten Quarzglas-Netzwerkstruktur umso geringer, je schneller der Abschreckvorgang von der Temperatur im oberen Temperaturbereich erfolgt. Die mittlere Abkühlrate beim Abschrecken beträgt daher vorzugsweise ein Vielfaches der mittleren Abkühlrate beim Abkühlen von der Temperatur aus dem unteren Temperaturbereich, also mindestens das Doppelte.

In dem Zusammenhang hat es sich bewährt, wenn die erste mittlere Abkühlrate mindestens 1 °C/h, vorzugsweise mindestens 2 °C/h, besonders bevorzugt mindestens 4°C/h, beträgt, und wenn die zweite mittlere Abkühlrate weniger als 1 °C/h, vorzugsweise weniger als 0,8°C/h, beträgt.

Eine weitere Verbesserung der UV-Bestrahlungsresistenz des Quarzglases ergibt sich, wenn die zweite Behandlungsphase eine zeitliche Abfolge von Aufheiz- und Abkühlschritten im unteren Temperaturbereich umfasst.

Die Einstellung einer möglichst niedrigen fiktiven Temperatur während der zweiten Behandlungsphase erfordert eine Modifikation der Netzwerkstruktur und eine Dichteänderung nicht nur im mikroskopischen, sondern auch eine Verformung im makroskopischen Maßstab. Hierzu ist eine Relaxation der Netzwerkstruktur über das gesamte Volumen des Quarzglasblocks erforderlich, auch um Spannungen abzubauen oder zu vermeiden. Es hat sich überraschend gezeigt, dass diese Relaxation der Netzwerkstruktur des gesamten Quarzglasrohlings durch eine oszillierende Temperbehandlung erleichtert wird, bei der quasi durch Aufheiz- und Abkühlvorgänge erzeugte Temperaturwellen durch den gesamten Rohling laufen.

Es hat sich auch bewährt, wenn die mehrstufige Temperbehandlung ein Nachtempern im Temperaturbereich zwischen 650 °C und 850 °C umfasst.

Dem Quarzglas wird hierbei noch einmal Gelegenheit zur Relaxation gegeben. Die Temperaturverteilung innerhalb des Quarzglasrohlings wird homogenisiert und tatsächliche und "eingefrorene" thermische Gradienten, die zu Spannungsdoppelbrechung führen, werden verringert.

Im Hinblick auf ein günstiges Verhalten gegenüber Kompaktierung und zentraler Doppelbrechung des Quarzglasrohlings ist es von Vorteil, wenn die fiktive Temperatur des Quarzglases nach Abschluss der Temperbehandlung unterhalb von 1045 °C liegt, vorzugsweise unterhalb von 1035 °C.

Je geringer die fiktive Temperatur des Quarzglases ist, umso besser ist seine UV-Strahlenbeständigkeit im Hinblick auf den Schädigungsmechanismus der Kompaktierung. Andererseits erfordert die Einstellung einer besonders niedrigen fiktiven Temperatur wegen der Abschreckung des Quarzglases aus dem oberen Temperaturbereich beim erfindungsgemäßen Verfahren vergleichsweise lange Behandlungsdauern im unteren Temperaturbereich. Fiktive Temperaturen unterhalb von 1000 °C werden daher in der Regel nicht erreicht.

Als besonders geeignet hat es sich erwiesen, wenn die erste Behandlungsdauer mindestens 5 h beträgt.

Je länger die Behandlungsdauer bei hoher Temperatur ist, umso verlässlicher und reproduzierbarer gelangt der Quarzglasrohling in ein thermisches Gleichgewicht und umso ausgeprägter und homogener erfolgt die Einstellung der Hochtemperaturphase über das gesamte Volumen des Rohlings. Die Behandlungsdauer bei hoher Temperatur umfasst auch die oder mehrere Aufheiz- und Abkühlrampen, solange der Rohling dabei eine Temperatur im oberen Temperaturbereich aufweist. Dabei kommen leicht bis Behandlungsdauern zu 40 Stunden zustande.

Bezüglich der zweiten Behandlungsdauer hat es sich eher als günstig erwiesen, wenn diese mindestens 100 Stunden und maximal 12 Tage beträgt.

In der Regel ist zur Einstellung der gewünscht niedrigen fiktiven Temperatur des Quarzglasrohlings eine lange zweite Behandlungsdauer von mindestens 100 Stunden erforderlich. Allerdings sind Behandlungsdauern von mehr als zwölf Tagen nicht nur aus Kostengründen nachteilig, sondern auch im Hinblick auf Veränderungen der Glasstruktur, insbesondere durch die Ausbildung von Inhomogenitäten infolge von Ausdiffusion von Komponenten und Kontaminationen durch eindiffundierende Verunreinigungen und durch eine zunehmende Umwandlung in Niedrigtemperaturphase.

Es ist außerdem vorteilhaft, wenn der Quarzglasrohling nach der Temperbehandlung mit Wasserstoff beladen wird, wobei der mittlere Wasserstoffgehalt des Quarzglases auf einen Wert zwischen $5 \times 10^{15}$ und $1 \times 10^{17}$ Moleküle/cm$^3$ eingestellt wird.

Bekanntlich zeigt Wasserstoff eine ausheilende Wirkung in Bezug auf Defekte, die durch UV-Bestrahlung in Quarzglas entstehen. Beim erfindungsgemäßen Verfahren wird ein etwaiger anfänglicher Wasserstoffgehalt des Quarzglases jedoch vor dem Tempern entfernt, um die Ausbildung von SiH-Gruppen zu vermeiden. Daher wird der Quarzglasrohling nachträglich mit Wasserstoff beladen. Je höher der Wasserstoffgehalt ist, umso mehr wirkt sich seine defektausheilende Wirkung bei UV-Bestrahlung aus. Andererseits kann ein hoher Wasserstoffgehalt zur Bildung von SiH-Gruppen beitragen und er führt zu einer Verlängerung von Beladungszeiten und einer Vergrößerung des dafür erforderlichen apparativen Aufwandes, so dass der mittlere Wasserstoffgehalt des Quarzglases bevorzugt weniger als $1 \times 10^{17}$ Moleküle/cm$^3$ beträgt. SiH-Gruppen in Quarzglas sind unerwünscht, da aus ihnen bei Bestrahlung mit energiereichem UV-Licht ein sogenanntes E'-Zentrum entsteht, das eine Absorption bei einer Wellenlänge von 210 nm bewirkt und sich auch im angrenzenden UV-Wellenlängenbereich bemerkbar macht. Um die Ausbildung von SiH-Gruppen bereits bei der Wasserstoffbeladung zu vermeiden, erfolgt diese bei niedriger Temperatur unterhalb von 500 °C.

Der Wasserstoffgehalt ($H_2$-Gehalt) wird anhand einer Raman-Messung ermittelt, die erstmals von Khotimchenko et al. vorgeschlagen worden ist ("Determining the Content of Hydrogen Dissolved in Quartz Glass Using the Methods of Raman Scattering and Mass Spectrometry" Zhurnal Prikladnoi Spektroskopii, Vol. 46, No. 6 (Juni 1987), S. 987-991).

Bei einer besonders bevorzugten Verfahrensvariante wird der mittlere Hydroxylgruppengehalt des Quarzglases auf einen Wert zwischen 10 und 35 Gew.-ppm eingestellt.

Die Viskosität des Quarzglases und sein Relaxationsverhalten werden wesentlich durch seinen Hydroxylgruppengehalt (OH-Gehalt) beeinflusst. Es ist zu vermuten, dass die Umwandlung von Hochtemperaturphase in Niedrigtemperaturphase durch Hydroxylgruppen erleichtert wird und mit einer Umlagerung von Hydroxylgruppen einhergeht. Dieser Umlagerungsmechanismus läuft um so wahrscheinlicher und leichter ab, je mehr Hydroxylgruppen zur Verfügung stehen. Ein geringer Hydroxylgruppengehalt verringert daher die Empfindlichkeit der Glasstruktur für Phasenumwandlungsprozesse, und ein Quarzglas mit einem Hydroxylgruppengehalt im oben genannten Bereich zeichnet sich durch eine besonders geringe Kompaktierungsneigung aus. Die obigen Angaben zu Temper-Temperaturen und -Zeiten, mittlere Abkühlraten und fiktiven Temperaturen wurden an Quarzglas mit einem Hydroxylgruppengehalt im Bereich von 5 Gew.-ppm bis 50 Gew.-ppm ermittelt. Es ist davon auszugehen, dass sich die entsprechenden Angaben bei Quarzglas mit anderem Hydroxylgruppengehalt davon unterscheiden.

Der Hydroxylgruppengehalt ergibt sich durch Messung der IR-Absorption nach der Methode von D. M. Dodd and D. B. Fraser, "Optical determination of OH in fused silica", J. Appl. Physics, Vol. 37(1966), S. 3911.

Hinsichtlich des Rohlings aus synthetischem Quarzglas wird die oben genannte Aufgabe ausgehend von einem Rohling der eingangs genannten Gattung erfindungsgemäß dadurch gelöst, dass der Rohling mittels des erfindungsgemäßen Verfahrens gemäß Anspruch 14 hergestellt ist.

Der Quarzglasrohling gemäß der Erfindung ist durch sein Herstellungsverfahren gekennzeichnet. Dieses ist daraufhin angelegt, im Quarzglas des Rohlings im Verlauf des Temperprozesses einen möglichst hohen Anteil an "Hochtemperaturphase" aufrecht zu erhalten und dem Quarzglas gleichzeitig eine akzeptabel niedrige fiktive Temperatur aufzuprägen. Die aus dem Stand der Technik bekannten Maßnahmen zur Einstellung einer möglichst niedrigen fiktiven Temperatur des Quarzglases wirken der Aufrechterhaltung eines möglichst hohen Anteils an Hochtemperaturphase entgegen. Das oben näher erläuterte erfindungsgemäße Verfahren lehrt einen geeigneten Kompromiss, der die Herstellung eines Quarzglasrohlings mit kompaktierungsresistenter Quarzglasstruktur ermöglicht.

Wie oben anhand der Erläuterung des erfindungsgemäßen Verfahrens bereits erwähnt, gibt es zwar Modelle, die die Existenz von Hochtemperaturphase und Niedrigtemperaturphase in Quarzglas erklären können, jedoch keine Methode zur quantitativen Bestimmung dieser Phasen. Lediglich eine mittelbare und qualitative Abschätzung anhand von UV-Schädigungsmessungen am fertigen Quarzglasrohling ist möglich.

Es hat sich gezeigt, dass ein optisches Bauteil, das aus einem Quarzglasrohling gemäß der Erfindung gefertigt wird, eine vergleichsweise geringe anisotrope und isotrope Dichteänderung beim Einsatz mit energiereicher UV-Laserstrahlung erfährt, so dass es insbesondere für den Einsatz zur Übertragung linear polarisierter UV-Strahlung einer Wellenlänge zwischen 190 nm und 250 nm besonders gut geeignet ist.

Der fertiggestellte Rohling gemäß der Erfindung weist neben dem möglichst hohen Anteil an Hochtemperaturphase weiterhin vorzugsweise eine fiktive Temperatur (im Mittel) unterhalb von 1035 °C, auf, sowie einen mittleren Gehalt an Hydroxylgruppen zwischen 10 und 35 Gew.-ppm.

Hinsichtlich seiner Herstellung und weiterer Eigenschaften des erfindungsgemäßen Quarzglasrohlings wird auf die obigen Erläuterungen zum erfindungsgemäßen Verfahren hingewiesen.

Ausführungsbeispiel

Nachfolgend wird die Erfindung anhand von Ausführungsbeispielen und einer Zeichnung näher erläutert. In der Zeichnung zeigen

Figur 1     ein Ausführungsbeispiel für ein Temperatur-Zeit-Profil zum Tempern eines Quarzglasrohlings gemäß der Erfindung in schematischer Darstellung,

Figur 2     ein Diagramm zur Korrelation zwischen gemessenen Werten und einem Modell zur Kompaktierung des Quarzglases gegenüber UV-Strahlung in Abhängigkeit von seiner thermischen Historie, und

Figur 3     ein Diagramm zur Abhängigkeit der durch UV-Strahlung induzierten zentralen Doppelbrechung in Abhängigkeit von der Pulszahl der UV-Strahlung für verschieden getemperte Quarzglas-Qualitäten.

*Probenherstellung*

Es wird ein Sootkörper durch Flammenhydrolyse von $SiCl_4$ anhand des bekannten OVD-Verfahrens hergestellt. Der Sootkörper wird bei einer Temperatur von 1200 °C in einem Heizofen mit einem Heizelement aus Grafit unter Vakuum dehydratisiert. Nach Abschluss der Dehydratationsbehandlung nach 100 Stunden liegt der mittlere Hydroxylgruppengehalt des Sootkörpers bei etwa 30 Gew.-ppm.

Der getrocknete Sootkörper wird anschließend in einen Dotierofen eingebracht und darin bei einer Temperatur von 1100 °C während 20 Stunden in einer Atmosphäre aus 5 % Sauerstoff, Rest Inertgas behandelt. Diese Behandlung ist so bemessen, dass etwaige Sauerstoff-Fehlstellen entfernt werden.

Danach wird der getrocknete und nachbehandelte Sootkörper in einem Sinterofen bei einer Temperatur von ca. 1750 °C unter Vakuum ($10^{-2}$ mbar) zu einem transparenten Quarzglasrohling verglast. Dieser wird anschließend durch thermisch mechanische Homogenisierung (Verdrillen) und Bildung eines Quarzglaszylinders homogenisiert. Der Hydroxylgruppengehalt des Quarzglaszylinders beträgt danach weiterhin etwa 30 Gew.-ppm.

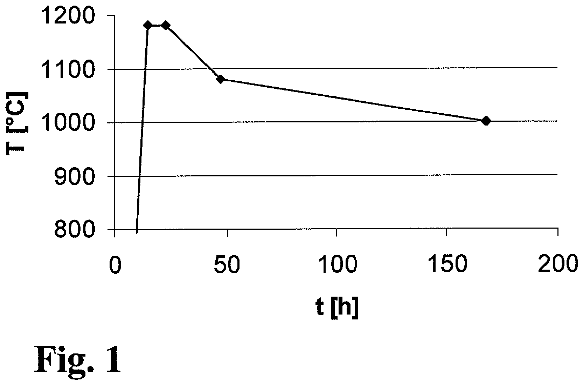

Zum Abbau mechanischer Spannungen und zur Verminderung der Doppelbrechung sowie zur Erzeugung einer kompaktierungsresistenten Glasstruktur wird der Quarzglaszylinder einer Temperbehandlung unterzogen, wie sie das Temperprofil T(t) von **Figur 1** in einem Ausführungsbeispiel zeigt.

Hierbei wird der Quarzglaszylinder innerhalb 15 Stunden auf eine Temperatur von 1180 °C aufgeheizt und bei dieser Temperatur in einer ersten Behandlungsphase 8 Stunden lang unter Luft und Atmosphärendruck gehalten. Anschließend wird der Quarzglaszylinder mit einer hohen Abkühlrate von 4 °C/h auf eine Temperatur von 1080 °C abgeschreckt.

Daran schließt sich eine zweite Behandlungsphase an, während der der Quarzglaszylinder mit einer geringen Abkühlrate von 0,7 °C/h auf eine Temperatur von 1000 °C weiter abgekühlt wird. Diese Abkühlrampe hat somit eine Gesamtdauer von 114 Stunden.

Anschließend erfolgt eine weitere Abkühlung auf eine Temperatur von 750 °C, bei der der Zylinder zum Abbau mechanischer Spannungen weitere 80 Stunden gehalten wird, bevor er mit einer Abkühlrate von 50 °C/h auf eine Temperatur von 300 °C abgekühlt, und daraufhin der Ofen abgestellt und der Quarzglaszylinder der freien Abkühlung des Ofens überlassen wird.

Der so behandelte Quarzglaszylinder hat einen Außendurchmesser von 350 mm und eine Dicke von 60 mm. Das Quarzglas hat eine mittlere fiktive Temperatur von 1038 °C. Von den Stirnflächen des Quarzglaszylinders wird vor dem nächsten Behandlungsschritt ein Teil des Übermaßes zur Bauteil-Kontur abgenommen, nämlich eine Dicke von 3 mm.

Danach wird der Quarzglaszylinder in einer reinen Wasserstoffatmosphäre bei 380 °C zunächst bei einem Absolutdruck von 2 bar während einer Dauer von 300 Stunden und anschließend bei derselben Temperatur bei einem Wasserstoffpartialdruck von 0 bar während einer Dauer von 25 h, und danach bei einem Absolutdruck von 0,1 bar während einer Dauer von 850 Stunden gehalten.

Der danach erhaltene Quarzglaszylinder ist im Wesentlichen frei von Chlor, Sauerstoffdefektstellen und SiH-Gruppen (unterhalb der Nachweisgrenze von $5 \times 10^{16}$ Molekülen/$cm^3$), und er zeichnet sich innerhalb eines Durchmessers von 280 mm (CA-Bereich) durch einen mittleren Wasserstoffgehalt von $3 \times 10^{16}$ Molekülen/$cm^3$, einen mittleren Hydroxylgruppengehalt von 30 Gew.-ppm sowie durch eine mittlere fiktive Temperatur von 1038 °C aus.

Auf diese Art und Weise wurden unter Variation der Temperbedingungen der ersten und der zweiten Behandlungsphase mehrere Quarzglaszylinder hergestellt. Eine Variation der Temperbedingungen besteht darin, während der zweiten Behandlungsphase auf eine Temperatur von 1050 °C abzukühlen und anschließend von dieser Temperatur ausgehend im Temperaturbereich bis 1080 °C eine zyklische Folge von sinusförmigen Aufheiz- und Abkühlrampen von 0,33 °C/min und mit einer Amplitude von 30 °C folgen zu lassen.

### Messungen

Aus den so hergestellten Quarzglaszylindern wurden Messproben für die Ermittlung der Resistenz des Quarzglases gegenüber Bestrahlung mit linear polarisierter UV-Excimerlaserstrahlung einer Wellenlänge von 193 nm gefertigt. Dabei wurde sowohl die isotrope Dichteänderung (Kompaktierungsverhalten) als auch die anisotrope Dichteänderung (zentrale Doppelbrechung) ermittelt.

### Messergebnisse

Im Hinblick auf das Kompaktierungsverhalten konnte eine eindeutige Korrelation der Dichteänderung mit der fiktiven Temperatur der unterschiedlichen Quarzglasproben nicht gefunden werden, wie auch bereits weiter oben erwähnt. Ebenso ist auch zwischen der Änderung der Dichte der Quarzglasproben - in Abhängigkeit von der Abschreckgeschwindigkeit von 1180 °C auf eine geringe Temperatur (< 980 °C), wobei die minimale Abkühlrate 0,56 °C/h beträgt - keine eindeutige Korrelation feststellbar.

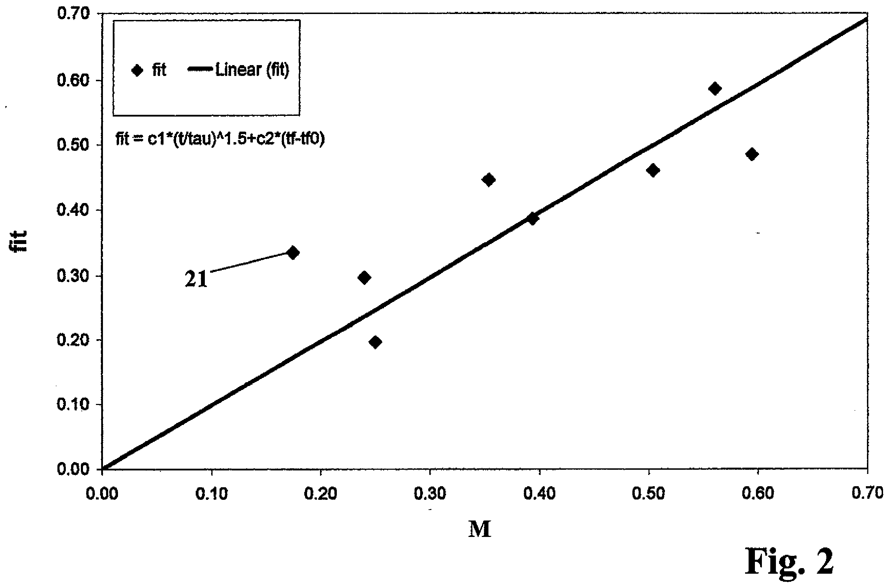

**Figur 2** zeigt jedoch, dass sich ein fast linearer Zusammenhang zwischen der gemessenen Kompaktierung "M" und einer Modellfunktion "fit" ergibt, in der die beiden genannten Parameter (fiktive Temperatur und Temperdauer) wie folgt zusammengefasst sind:

$$fit = c1 \times \left( \frac{t}{\tau} \right)^{1,5} + c2 \times (Tf - Tf0) \qquad (1)$$

c1 und c2 = Konstanten  
t = Gesamttemperdauer  
$\tau$ = feste, temperaturunabhängige Relaxationszeit  
Tf = gemessene fiktive Temperatur  
Tf0 = Offset zur fiktiven Temperatur

Der erste Term $(t/\tau)^{1,5}$ beschreibt die Wahrscheinlichkeit für eine Umwandlung von Hochtemperaturphase in Niedrigtemperaturphase und ist somit ein Maß für den Anteil an Niedrigtemperaturphase im jeweiligen Quarzglas. Der zweite Term (Tf-Tf0) ist ein Maß für die fiktive Temperatur des Quarzglases.

Das Diagramm von Figur 2 zeigt somit dass die Modellfunktion für die Kompaktierung *"fit",* die diese beiden Einflussgrößen berücksichtigt, mit der tatsächlich gemessenen Kompaktierung skaliert. Das bedeutet, dass mit zunehmendem Anteil an Niedrigtemperaturphase und mit zunehmender fiktive Temperatur die Empfindlichkeit der Quarzglasproben in Bezug auf eine isotrope Dichteänderung bei Bestrahlung mit linear polarisierter Laserlicht-Strahlung einer Wellenlänge von 193 nm zunimmt. Die Quarzglasprobe, deren Herstellung oben näher erläutert ist, ist in Figur 2 mit der Bezugsziffer 21 gekennzeichnet. Die entsprechende Strahlenresistenz der Quarzglasprobe kann als sehr gut angesehen werden.

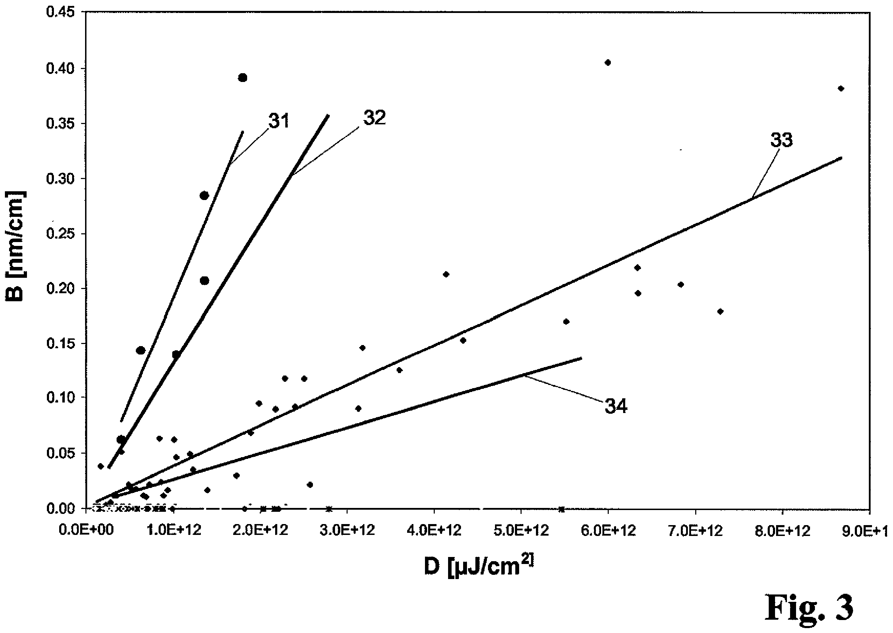

Das Diagramm von **Figur 3** zeigt die Änderung des Brechungsindex "ΔB" (in nm/cm) der zentralen Doppelbrechung in Abhängigkeit von der Bestrahlungsdosis "D", ausgedrückt als Produkt der Pulszahl P und der Energiedichte ε (in $\mu$/cm$^2$) der eingestrahlten UV-Strahlung für insgesamt vier unterschiedlicher Quarzglas-Qualitäten (Ausgleichsgeraden 31 bis 34). Die Proben wurden dabei linear polarisierter UV-Strahlung einer Wellenlänge von 193 nm ausgesetzt und die dabei erzeugte Änderung der Doppelbrechung von Zeit zu Zeit gemessen. Es ergibt sich eine ungefähr lineare Zunahme der Doppelbrechung mit der eingestrahlten Dosis. Die vier Ausgleichsgeraden 31 bis 34 repräsentieren dabei die Messergebnisse für Quarzglas-Qualitäten mit folgenden Temperparametern:

Gerade 31: 4h Haltezeit bei 1100 °C, danach in 14h auf 1040 °C, 1 h bei 1040 °C gehalten. Das Quarzglas hat eine fiktive Temperatur von 1093 °C

Gerade 32: 8h Haltezeit bei 1180 °C, danach in 72h auf 1040 °C, 1 h bei 1040 °C gehalten. Das Quarzglas hat eine fiktive Temperatur von 1078 °C

Gerade 33: 8h Haltezeit bei 1180 °C, danach in 168h auf 1040 °C, 1 h bei 1040 °C gehalten. Das Quarzglas hat eine fiktive Temperatur von 1063 °C

Gerade 34: Das Quarzglas wurde hergestellt und erfindungsgemäß getempert, wie oben beschrieben.

Daraus ist erkennbar, dass die anisotrope Dichteänderung bei allen Proben mit der Dosis der UV-Strahlung zunimmt, dass aber die Zunahme bei der Probe aus dem erfindungsgemäß hergestellten Quarzglas deutlich geringer ist als bei anderen Quarzglas-Qualitäten. Optische Bauteile, die aus einer entsprechenden Quarzglasqualität hergestellt sind, sind für den Einsatz in einem Projektionssystem eines Belichtungsautomaten für die Immersions-Lithographie zum Zweck der Übertragung von ultravioletter, gepulster und linear polarisierter UV-Laserstrahlung einer Wellenlänge zwischen 190 nm und 250 nm besonders geeignet.

**Patentansprüche**

1. Verfahren zur Herstellung eines optischen Bauteils aus synthetischem Quarzglas mit erhöhter Strahlenbeständigkeit zur Verwendung in einem Mikrolithographiegerät mit einer Arbeitswellenlänge unterhalb von 250 nm, wobei ein Quarzglasrohling mit einem mittleren Hydroxylgruppengehalt zwischen 5 und 50 Gew.-ppm bereitgestellt und einer mehrstufigen Temperbehandlung unterzogen wird, die folgende Verfahrensschritte umfasst:

(a) eine erste Behandlungsphase, während der der Quarzglasrohling in einem oberen Temperaturbereich zwischen 1130 °C und 1230 °C während einer ersten Behandlungsdauer behandelt wird,
(b) ein Abkühlen des Quarzglasrohlings mit einer ersten mittleren Abkühlrate auf eine Abschrecktemperatur unterhalb von 1100 °C, wobei sich im Quarzglas eine fiktive Temperatur mit einem hohen Mittelwert von 1100 °C oder mehr einstellt,
(c) eine zweite Behandlungsphase, bei der der Quarzglasrohling in einem unteren Temperaturbereich zwischen 950 °C und 1100 °C während einer zweiten Behandlungsdauer derart behandelt wird, dass sich im Quarzglas eine fiktive Temperatur mit einem niedrigen Mittelwert einstellt, der um mindestens 50 °C niedriger liegt als der hohe Mittelwert der fiktiven Temperatur nach Verfahrensschritt (b), und die ein Abkühlen des Quarzglasrohlings mit einer zweiten mittleren Abkühlrate, die niedriger ist als die erste mittlere Abkühlrate, umfasst.

2. Verfahren nach Anspruch 1, **dadurch gekennzeichnet, dass** die erste Behandlungsphase ein Tempern im Temperaturbereich von 1150 °C bis 1210 °C umfasst.

3.  Verfahren nach Anspruch 1 oder 2, **dadurch gekennzeichnet, dass** die zweite Behandlungsphase ein Tempern im Temperaturbereich von 1000 °C bis 1100 °C, umfasst.

4.  Verfahren nach einem der vorhergehenden Ansprüche, **dadurch gekennzeichnet, dass** die Abschrecktemperatur um mindestens 50 °C, vorzugsweise um mindestens 80 °C, niedriger liegt als die Behandlungstemperatur im oberen Temperaturbereich.

5.  Verfahren nach einem der vorhergehenden Ansprüche, **dadurch gekennzeichnet, dass** die Abschrecktemperatur niedriger ist als 1090 °C, vorzugsweise niedriger als 1070 °C.

6.  Verfahren nach einem der vorhergehenden Ansprüche, **dadurch gekennzeichnet, dass** die erste mittlere Abkühlrate mindestens 1 °C/h, vorzugsweise mindestens 2 °C/h, besonders bevorzugt mindestens 4 °C/h, beträgt.

7.  Verfahren nach einem der vorhergehenden Ansprüche, **dadurch gekennzeichnet, dass** die zweite Abkühlrate weniger als 1 °C/h, vorzugsweise weniger als 0,8 °C/h, beträgt.

8.  Verfahren nach einem der vorhergehenden Ansprüche, **dadurch gekennzeichnet, dass** die erste mittlere Abkühlrate mindestens doppelt so groß ist wie die zweite Abkühlrate.

9.  Verfahren nach einem der vorhergehenden Ansprüche, **dadurch gekennzeichnet, dass** die zweite Behandlungsphase eine zeitliche Abfolge von Aufheiz- und Abkühlschritten im unteren Temperaturbereich umfasst.

10. Verfahren nach einem der vorhergehenden Ansprüche, **dadurch gekennzeichnet, dass** die mehrstufige Temperbehandlung ein Nachtempern im Temperaturbereich zwischen 650 °C und 850 °C umfasst.

11. Verfahren nach einem der vorhergehenden Ansprüche, **dadurch gekennzeichnet, dass** die fiktive Temperatur des Quarzglases nach Abschluss der Temperbehandlung unterhalb von 1045 °C liegt, vorzugsweise unterhalb von 1035 °C.

12. Verfahren nach einem der vorhergehenden Ansprüche, **dadurch gekennzeichnet, dass** die erste Behandlungsdauer mindestens 5 Stunden beträgt.

13. Verfahren nach einem der vorhergehenden Ansprüche, **dadurch gekennzeichnet, dass** die zweite Behandlungsdauer mindestens 100 Stunden und maximal 12 Tage beträgt.

14. Verfahren nach einem der vorgehenden Verfahrensansprüche, **dadurch gekennzeichnet, dass** der Quarzglasrohling nach der Temperbehandlung mit Wasserstoff beladen wird, wobei der mittlere Wasserstoffgehalt des Quarzglases auf einen Wert zwischen $5 \times 10^{15}$ und $1 \times 10^{17}$ Moleküle/cm$^3$ eingestellt wird.

15. Verfahren nach einem der vorhergehenden Ansprüche, **dadurch gekennzeichnet, dass** der mittlere Hydroxylgruppengehalt des Quarzglases auf einen Wert zwischen 10 und 35 Gew.-ppm eingestellt wird.

16. Rohling aus synthetischem Quarzglas zur Herstellung eines optischen Bauteils für die Verwendung in einem Mikrolithographiegerät mit einer Arbeitswellenlänge unterhalb von 250 nm, , wobei das Quarzglas im Mittel eine fiktive Temperatur unterhalb von 1080 °C, und einen mittleren Gehalt an Hydroxylgruppen zwischen 5 bis 50 Gew.-ppm, und einen mittleren Wasserstoffgehalt im Bereich zwischen $5 \times 10^{15}$ und $1 \times 10^{17}$ Moleküle/cm$^3$ aufweist, **dadurch gekennzeichnet, dass** der Rohling nach einem Verfahren gemäß Anspruch 14 hergestellt ist.

17. Rohling nach Anspruch 16, **dadurch gekennzeichnet, dass** das Quarzglas im Mittel eine fiktive Temperatur unterhalb von 1035 °C aufweist, und einen mittleren Gehalt an Hydroxylgruppen zwischen 10 und 35 Gew.-ppm aufweist.

**Claims**

1.  A method for producing an optical component of synthetic quartz glass with enhanced radiation resistance for use in a microlithographic device at an operating wavelength below 250 nm, in which a quartz glass blank with a hydroxyl group content of less than 250 wt.-ppm is provided and subjected to a multi-stage annealing treatment, the method comprising the following steps:

(a) a first treatment phase during which the quartz glass blank is treated in an upper temperature range between 1130°C and 1240°C during a first treatment period,
(b) cooling the quartz glass blank at a first mean cooling rate to a quenching temperature below 1100°C, the quartz glass reaching a fictive temperature with a high mean value of 1100°C or more,
(c) a second treatment phase comprising cooling of the quartz glass blank at a second mean cooling rate, which is lower than the first mean cooling rate, the quartz glass blank being treated in a lower temperature range between 950°C and 1100°C during a second treatment period such that the quartz glass reaches a fictive temperature with a low mean value that is at least 50°C lower than the high mean value of the fictive temperature of method step (b).

2. The method according to claim 1, **characterized in that** the first treatment phase comprises annealing the quartz glass blank in the temperature range of 1150°C to 1210°C.

3. The method according to claim 1 or 2, **characterized in that** the second treatment phase comprises annealing the quartz glass blank in the temperature range of from 1000°C to 1100°C.

4. The method according to any one of the preceding claims, **characterized in that** the quenching temperature is by at least 50°C, preferably by at least 80°C, lower than the treatment temperature in the upper temperature range.

5. The method according to any one of the preceding claims, **characterized in that** the quenching temperature is lower than 1090°C, preferably lower than 1070°C.

6. The method according to any one of the preceding claims, **characterized in that** the first mean cooling rate is at least 1°C/h, preferably at least 2°C/h, particularly preferably at least 4°C/h.

7. The method according to any one of the preceding claims, **characterized in that** the second mean cooling rate is less than 1°C/h, preferably less than 0.8°C/h.

8. The method according to any one of the preceding claims, **characterized in that** the first mean cooling rate is at least two times the second mean cooling rate.

9. The method according to any one of the preceding claims, **characterized in that** the second treatment phase includes a time sequence of heating and cooling steps in the lower temperature range.

10. The method according to any one of the preceding claims, **characterized in that** the multi-stage annealing treatment further includes post-annealing the quartz glass blank in the temperature range between 650°C and 850°C.

11. The method according to any one of the preceding claims, **characterized in that** the fictive temperature of the quartz glass is below 1045°C, preferably below 1035°C, after completion of the annealing treatment.

12. The method according to any one of the preceding claims, **characterized in that** the first treatment period is at least 5 hours.

13. The method according to any one of the preceding claims, **characterized in that** the second treatment period is at least 100 hours and for not more than 12 days.

14. The method according to any one of the preceding claims, **characterized in that** the quartz glass blank is loaded with hydrogen after the annealing treatment, the mean hydrogen content of the quartz glass being set to a value between $5 \times 10^{15}$ and $1 \times 10^{17}$ molecules/cm$^3$.

15. The method according to any one of the preceding claims, **characterized in that** the mean hydroxyl group content of the quartz glass is set to a value between 5 wt.-ppm and 50 wt.-ppm, preferably between 10 wt.-ppm and 35 wt.-ppm.

16. A blank made from synthetic quartz glass for producing an optical component for use in a microlithographic device at an operating wavelength below 250 nm, the quartz glass comprising a fictive temperature with an average value below 1080°C, and a mean content of hydroxyl groups between 5 to 50 wt.-ppm, and a mean hydrogen content in the range between 5 x $10^{15}$ and 1 x $10^{17}$ molecules/cm$^3$, **characterized in that** the blank being produced by means of a method according to claim 14.

17. The blank according to claim 16, **characterized in that** the quartz glass has a fictive temperature with an average value below 1035°C, and a mean content of hydroxyl groups between 10 and 35 wt.-ppm.

**Revendications**

1. Procédé pour la fabrication d'un composant optique en verre de quartz synthétique avec une résistance aux rayonnements élevée destiné à être utilisé dans un appareil microlithograpique dans une longueurs d'ondes de travail inférieure à 250 nm, une ébauche de verre de quartz étant préparée avec une teneur en groupes hydroxyles comprise entre 5 et 50 ppm en poids et soumise à un traitement thermique multiphase qui comprend les étapes suivantes :

   (a) une première phase de traitement, pendant laquelle l'ébauche de verre de quartz est traitée à une plage de températures comprises entre 1130°C et 1230°C pendant une première durée de traitement,
   (b) un refroidissement de l'ébauche de verre de quartz avec une première vitesse de refroidissement moyenne à une température de trempe inférieure à 1100°C, une température fictive avec une valeur moyenne élevée égale ou supérieure à 1100°C étant établie dans le verre de quartz,
   (c) une seconde phase de traitement, où l'ébauche de verre de quartz est traitée dans une seconde durée de température dans une plage de températures comprises entre 950°C et 1100°C, de manière à obtenir une température fictive dont la valeur moyenne est inférieure d'au moins 50°C à la valeur moyenne élevée de la température fictive selon l'étape de procédé (b), et qui comprend un refroidissement de l'ébauche de verre de quartz à une seconde vitesse de refroidissement moyenne qui est inférieure à la première vitesse de refroidissement moyenne.

2. Procédé selon la revendication 1, **caractérisé en ce que** la première phase de traitement comprend un tempérage dans la plage de températures comprises entre 1150°C et 1210°C.

3. Procédé selon la revendication 1 ou 2, **caractérisé en ce que** la seconde phase de traitement comprend un tempérage dans la plage de températures comprises entre 1000°C et 1100°C.

4. Procédé selon l'une des revendications précédentes, **caractérisé en ce que** la température de refroidissement est inférieure d'au moins 50°C de préférence d'au moins 80°C à la température de traitement dans la plage de température supérieure.

5. Procédé selon l'une des revendications précédentes, **caractérisé en ce que** la température de refroidissement est inférieure à 1090°C, de préférence inférieure à 1070°C.

6. Procédé selon l'une des revendications précédentes, **caractérisé en ce que** la première vitesse moyenne de refroidissement est au moins 1°C/h, de préférence 2°C/h, en particulier 4°C/h.

7. Procédé selon l'une des revendications précédentes, **caractérisé en ce que** la seconde vitesse de refroidissement est inférieure à 1°C/h de préférence inférieure à 0,8°C/h.

8. Procédé selon l'une des revendications précédentes, **caractérisé en ce que** la première vitesse moyenne de refroidissement est au moins le double de la seconde vitesse de refroidissement.

9. Procédé selon l'une des revendications précédentes, **caractérisé en ce que** la seconde phase de traitement comprend une succession temporelle d'étapes de chauffage et de refroidissement dans la plage de température inférieure.

10. Procédé selon l'une des revendications précédentes, **caractérisé en ce que** le traitement thermique multiphase comprend un tempérage ultérieure dans la plage de températures comprises entre 650°C et 850°C

11. Procédé selon l'une des revendications précédentes, **caractérisé en ce que** la température fictive du verre de quartz à la fin du traitement thermique est inférieure à 1045°C, de préférence inférieure à 1035°C.

**12.** Procédé selon l'une des revendications précédentes, **caractérisé en ce que** la première durée de traitement est d'au moins 5 heures.

**13.** Procédé selon l'une des revendications précédentes, **caractérisé en ce que** la seconde durée de traitement est au moins de 100 heures et maximal 12 jours.

**14.** Procédé selon l'une des revendications précédentes, **caractérisé en ce que** l'ébauche de verre de quartz est chargée d'hydrogène après le traitement thermique, la teneur moyenne en hydrogène du verre de quartz étant définie à une valeur comprise entre $5 \times 10^{15}$ et $1 \times 10^{17}$ molécule/$cm^3$.

**15.** Procédé selon l'une des revendications précédentes, **caractérisé en ce que** la teneur moyenne en groupes hydroxyles du verre de quartz est définie à une valeur comprise entre 10 et 35 ppm en poids.

**16.** Ebauche en verre de quartz synthétique pour la fabrication d'un composant optique destiné à être utilisé un appareil microlithographique avec une longueur d'ondes de travail inférieure à 250 nm, le verre de quartz présentant en moyenne une température fictive inférieure à 1080°C, une teneur moyenne en groupes hydroxyles comprise entre 5 et 50 ppm en poids, ainsi qu'une teneur moyenne en hydrogène comprise entre $5 \times 10^{15}$ et $1 \times 10^{17}$ molécules/$cm^3$, **caractérisée en ce que** l'ébauche est fabriquée selon un procédé de la revendication 14.

**17.** Ebauche selon la revendication 16, **caractérisée en ce que** le verre de quartz présente en moyenne une température fictive inférieure à 1035°C et une teneur moyenne en groupes hydroxyles comprise entre 10 et 35 ppm en poids

Fig. 1

Fig. 2

**Fig. 3**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0401845 A1
- EP 1586544 A1
- EP 921104 A1
- EP 1134197 A1
- EP 1712528 A1
- US 20070004579 A1

**In der Beschreibung aufgeführte Nicht-Patentliteratur**

- **S. SEN et al.** Observation of an Anomalous Density Minimum in Vitreous Silica. *Phys. Rev. Letters,* 2004, vol. 93 (12), 125902-1
- **R. BRÜCKNER ; SILICON DIOXIDE.** Encyclopedia of Applied Physics. 1997, vol. 18, 101-131
- **CH. PFLEIDERER.** The UV-induced 210 nm absorption band in fused Silica with different thermal history and stoichiometry. *J. Non-Cryst. Solids,* 1993, vol. 159, 143-145
- **VON KHOTIMCHENKO et al.** Determining the Content of Hydrogen Dissolved in Quartz Glass Using the Methods of Raman Scattering and Mass Spectrometry. *Zhurnal Prikladnoi Spektroskopii,* Juni 1987, vol. 46 (6), 987-991
- **VON D. M. DODD ; D. B. FRASER.** Optical determination of OH in fused silica. *J. Appl. Physics,* 1966, vol. 37, 3911